# EUROPÄISCHE PATENTSCHRIFT

(11) **EP 1 465 791 B1**
(45) Veröffentlichungstag und Bekanntmachung des Hinweises auf die Patenterteilung: **19.07.2006**
(21) Anmeldenummer: 03702331.4
(22) Anmeldetag: 14.01.2003
(51) Int. Cl.: B60R 21/01, G01P 21/00

(54) **VERFAHREN ZUM BEWERTEN EINES EINBAUORTS EINER BESCHLEUNIGUNGSSENSOR-BAUGRUPPE IN EINEM FAHRZEUG**
METHOD FOR THE EVALUATION OF THE MOUNTING LOCATION OF AN ACCELERATION SENSOR COMPONENT IN A VEHICLE
PROCEDE POUR EVALUER L'EMPLACEMENT D'UN MODULE DE CAPTEUR D'ACCELERATION DANS UN VEHICULE

(30) Priorität: 17.01.2002 DE 10201551
(43) Veröffentlichungstag der Anmeldung: 13.10.2004
(73) Patentinhaber: Conti Temic microelectronic GmbH, 90411 Nürnberg (DE)
(72) Erfinder: WEICHENBERGER, Lothar, 86669 Klingsmoos (DE); BAUR, Richard, 85276 Pfaffenhofen (DE); STEURER, Helmut, 85302 Gerolsbach-Junkenhofen (DE)
(86) Internationale Anmeldenummer: PCT/DE2003/000082
(87) Internationale Veröffentlichungsnummer: WO 2003/059696

(56) Entgegenhaltungen:
- DE-A- 4 034 974
- DE-C- 10 042 376
- US-A- 5 073 860
- PATENT ABSTRACTS OF JAPAN vol. 018, no. 045 (P-1681), 24. Januar 1994 (1994-01-24) -& JP 05 273232 A (TOSHIBA CORP), 22. Oktober 1993 (1993-10-22)

## Beschreibung

Die Erfindung betrifft ein Verfahren zum Bewerten eines Einbauorts einer Beschleunigungssensor-Baugruppe in einem Fahrzeug hinsichtlich der Übertragungseigenschaften von auf das Fahrzeug einwirkenden Beschleunigungsimpulsen zu diesem Einbauort mit einer nachgeschalteten Auswerteschaltung, insbesondere für die Auslösung von Insassenschutzeinrichtungen.

Verfahren zum Auslösen von Insassenschutzsystemen in Abhängigkeit von Beschleunigungssignalen sind in großer Zahl bekannt, wobei dabei bereits auch neben der Amplitude des Beschleunigungssignals auch dessen Frequenzspektrum in die Auswertung einbezogen wird, wie beispielsweise aus der US 5,073,860 oder der DE 40 34 974 A1 zu entnehmen ist.

Aufgrund der für die Insassensicherheit erforderlichen frühzeitigen Auslösung der Insassenschutzsysteme muß relativ früh im Verlaufe eines Unfalls über die Auslösung entschieden werden. Die Auslöseschwellen sind daher relativ niedrig und leider auch durch Störsignale zu erreichen, wie sie bei unebener Fahrbahn, Berührungen eines seitlichen Fahrbahnrandsteines oder ähnlichem auftreten. Dabei wirkt insbesondere das Fahrzeug selbst aufgrund seiner Federung und der Eigenresonanz einzelner Teile störend. Insbesondere ist festzustellen, dass es trotz der Erfüllung vorgegebener Spezifikationen durch die Beschleunigungssensor-Baugruppen nach deren Einbau in bestimmten Fahrzeugen zu Fehlauslösungen des Insassenschutzsystems aufgrund solcher Störsignale kam.

Aufgabe der Erfindung ist es daher, den Fahrzeugherstellern als auch den Herstellern der Insassenschutzsysteme ein Verfahren zu bieten, durch welches derartige Störsignaleinflüsse erkannt werden können.

Diese Aufgabe wird durch die Merkmale des Anspruchs 1 gelöst. Vorteilhafte Weiterbildungen sind den Unteransprüchen zu entnehmen.

Es wird daher ein Verfahren zum Bewerten eines Einbauorts einer Beschleunigungssensor-Baugruppe in einem Fahrzeug hinsichtlich der Übertragungseigenschaften von auf das Fahrzeug einwirkenden Beschleunigungsimpulsen zu diesem Einbauort vorgeschlagen.

Dazu wird an einer, vorzugsweise mehreren vorgegebenen Positionen am Fahrzeug ein Beschleunigungsimpuls eingeprägt, am Einbauort die lmpulsantwort-gemessen, das Frequenzspektrum der lmpulsantwort ermittelt und durch Vergleich dieses Frequenzspektrums mit einem vorgegebenen Sollspektrum der Einbauort bewertet.

Vorzugsweise wird eine Gruppe von sicherheitsunbedenklichen Beschleunigungsimpuisen, bei denen keine Auslösung von Insassenschutzeinrichtungen erforderlich ist, eingeprägt, wobei der Einbauort danach bewertet wird, inwieweit die Frequenzspektren der Impulsantworten auf diese sicherheitsunbedenktichen Impulssignale das vorgegebene Sollspektrum nicht überschreiten sowie zusätzlich eine Gruppe von sicherheitskritischen Beschleunigungsimpulsen, bei denen eine Auslösung von Insassenschutzeinrichtungen erforderlich ist, eingeprägt, wobei der Einbauort danach bewertet wird, inwieweit die Frequenzspektren der Impulsantworten auf diese sicherheitskritischen Impulssignale das vorgegebene Sollspektrum das vorgegebene Sollspektrum übersteigen.

Dabei ist das vorzugebene Sollspektrum von besonderer Bedeutung und wird vorzugsweise bestimmt aus:
a) die Frequenzgangkennlinie des Sensors der am Einbauort einzubauenden Beschleunigungssensorbaugruppe und
b) die Frequenzgangkennlinie der mechanischen Bestandteile der Sensorbaugruppe und
c) einer Kennlinie der nachgeschalteten Auswerteschaltung.

Um die Aussagequalität der Bewertung des Einbauortes weiter zu erhöhen, kann nachfolgend die gewonnene lmpulsantwort in einem zweiten Verfahrenschritt mit einer vorgegebenen Gewichtsfunktion gewichtet und dem in der Auswerteschaltung durchzuführenden Auswertealgorithmus unterzogen werden, was einer Simulation der Reaktion der Auswerteschaltung auf den vorgegebenen Beschleunigungsimpuls entspricht.

Der besondere Vorteil dieses Verfahren ist, dass nach Vorgabe der Parameter dies vollautomatisch ablaufen kann und so einer Vielzahl unterschiedlicher Beschleunigungsimpulse eingeprägt und die entsprechenden Impulsantworten erfasst werden können, um durch entsprechende Bewertungsfaktoren, die sich nach den Besonderheiten des jeweiligen Beschleunigungsimpulses richten, zu einer Gesamtbewertung statistisch zusammengefasst werden.

Besonders vorteilhaft ist auch die Verwendung eines Normsignals, insbesondere eines Pseudozufallssignals, dessen Impulsantwort aufgrund der besonderen Eigenschaften durch Autokorrelation mit dem eingeprägten Normsignal mit einem oder zumindest einigen wenigen Signalen die gesamte Übertragungscharakteristik des Fahrzeugs an diesem Einbauort erfassen kann.

Das Verfahren zum Bewerten eines Einbauorts einer Beschleunigungssensor-Baugruppe kann dabei sowohl am Realfahrzeug mit realer Einprägung von Beschleunigungsimpulsen als auch mit einem Fahrzeugsimulationsprogramm auf einer Datenverarbeitungsanlage durchgeführt werden. Vorteil dieser Simulation ist, dass gerade auch im Bereich von Beschleunigungsimpulsen höherer Amplitude die dabei einhergehende Deformation von entsprechenden Fahrzeugen vermieden wird, wie es sich im Bereich der Crashanalyse bereits zum Stand der Technik entwickelt hat. Im vorliegenden Fall geht es jedoch nicht um die Bewertung der Karosserieverformung, sondern um die zeitlich vorgelagerte Beschleunigungsimpuls-Weiterleitung zum Einbauort. Das Verfahren hat jedoch grundsätzlich seinen Schwerpunkt eher im Bereich der Erkennung von ungewünschten Einflüssen von Störsignalen am Einbauort, also im sogenannten Misuse-Bereich, da hier auch die Linearität der Übertragungsfunktion noch gewährleistet ist.

Die Erfindung soll nachfolgend anhand von Ausführungsbeispielen und Figuren näher erläutert werden. Kurze Beschreibung der Figuren:
- Fig. 1: Einflußfaktoren auf die Signalübertragung bis hin zur Auslöseentscheidung
- Fig. 2: Sollspektrum am Einbauort
- Fig. 3: Gewichtsfunktion auf Basis des Sollspektrums
- Fig. 4: Versuchsäüfbau mit einer Mehrzahl von Positionen zur Einprägung von Beschleunigungsimpulsen

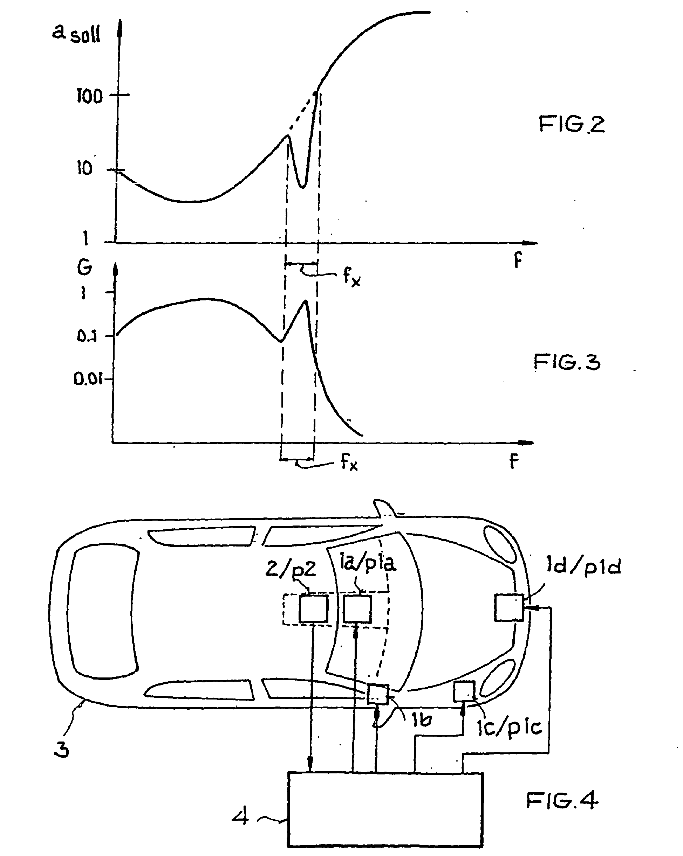

Die Fig. 4 skizziert einen Versuchsaufbau mit einer Mehrzahl von Positionen p1a, p1b, ... zur Einprägung von Beschleunigungsimpulsen bspw. mittels Vibratoren, Hammervorrichtungen oder vergleichbaren Vorrichtungen 1a, 1b, ..... Denkbar ist auch die Verwendung eines Rütteltischs, auf dem das Fahrzeug 3 befestjgt ist. Am Einbauort p2 kann die zum Serieneinbau vorgesehene Sensorbaugruppe 2 oder aber eine für den Versuchsaufbau besonders bevorzugte Sensoranordnung vorgesehen werden.

Für das in diesem Ausführungsbeispiel beschriebene Verfahren werden reale Beschleunigungssignale s1 auf das Fahrzeug 3 eingeprägt. Dabei können Beschleunigungssignale s1a mit natüriicher Charakteristik, insbesondere sicherheitsunbedenkliche Beschleunigungsimpulse, bei denen keine Auslösung von Insassenschutzeinrichtungen erforderlich ist, als auch zumindest in begrenzter Amplitude sicherheitskritische Beschleunigungsimpulse, bei denen eine Auslösung von Insassenschutzeinrichtungen erforderlich ist, eingeprägt werden. Alternativ oder ergänzend ist zudem die Einprägung von breitbandigen Normsignalen s1b, insbesondere weißem Rauschen oder einer Pseudozufallsfolge, bspw. einer MLS-Folge, denkbar, auf deren Vorteile später noch näher eingegangen werden soll.

Während der Einprägung von Beschleunigungsimpulsen an den Positionen p1a, p1b, ... werden die am Einbauort p2 ankommenden Impulsantworten gemessen, mittels der Mess- und Steuervorrichtung 4 das Frequenzspektrum der Impulsantwort ermittelt und durch Vergleich dieses Frequenzspektrums mit einem vorgegebenen Sollspektrum unter Berücksichtigung des eingeprägten Beschleunigungsimpulses der Einbauort bewertet.

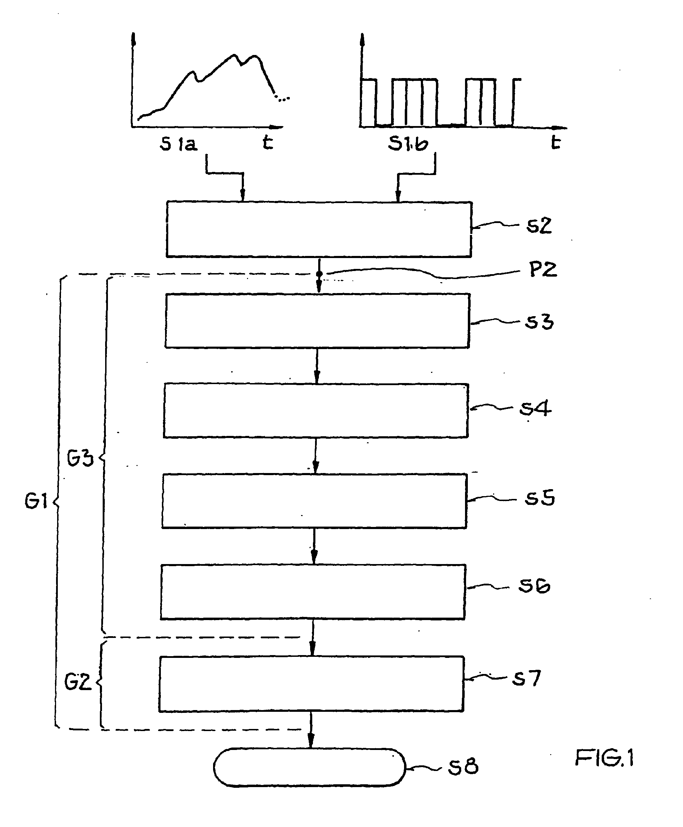

Fig. 1 skizziert funktional den Weg von der Einprägung eines Beschleunigungssignals bis hin zur Auslöseentscheidung und damit die Einflußfaktoren auf die Signalübertragung.

Zunächst ist die eigentlich für die Bewertung entscheidende Übertragungscharakteristik s2 des Fahrzeuges vom Ort der Einprägung bis zum Einbauort des Sensors zu nennen. Diese ist stark vom Fahrzeugtyp und dem gewählten Einbauort abhängig. Für die Vorgabe eines Sollspektrums bedarf es jedoch einer Berücksichtigung des gesamten Übertragungswegs bis hin letztlich zur Auslöseentscheidung s8.

Dazwischen liegen weitere Einflußfaktoren, die auch berücksichtigt werden sollen. So ist die Übertragungscharakteristik s3 unmittelbar am Einbauort, also der Übergang von der Kfz-Karosserie zur Sensorbaugruppe zu nennen, die von der gewählten Form des Gehäuses der Sensorbaugruppe und der Montagetechnik, insbesondere der Steifigkeit der Anbindung abhängt.

Einen leider äußerst kritischen Einfluß hat auch die Signalübertragungscharakteristik s4 in der Sensorbaugruppe selbst vom Gehäuse der Baugruppe bis zum eigentlichen Sensorelement, da die Leiterplatte in der Sensorbaugruppe eine eventuell kritische Eigenfrequenz im entscheidungserheblichen Bereich aufweisen kann.

Zudem ist die Übertragungscharakteristik s5 des Sensors selbst, also dessen Umwandlung des Impulses in ein elektrisches Signal als auch die Signalaufbereitungscharakteristik s6 des Sensors, also dessen Dämpfungsverhalten, eventuelle Einflüsse der A/D-Wandlung des Signals ect. zu berücksichtigen.

Abschließend kommt noch der eigentliche Auswertealgorithmus hinzu, der ausgehend vom gemessenen Beschleunigungssignal die Auslöseentscheidung s8, also die Bewertung über die Auslösung oder Nichtauslösung trifft. Dabei sind bestimmte Frequenzanteile für den Auswertealgorithmus stark wirksam, andere nicht. Das Problem dabei ist, das dies nicht zwingend damit korrespondiert, welche Frequenzanteile auch für die Auslöseentscheidung signifikant sind und welche nicht.

Der Auswertealgorithmus der Auswerteschaltung beinhaltet in der Regel eine Integration des Beschleunigungsimpulses über ein Zeitfenster, so dass vorzugsweise bei der Bewertung des Einbauorts ein Vergleich der gewichteten und über dieses Zeitfenster integrierten Impulsantwort mit einem Sollintegrationswert für den jeweils eingeprägten Beschleunigungsimpuls erfolgt.

Für eine möglichst genaue Bewertung müssen diese Einflußfaktoren daher berücksichtigt werden. Dazu kann für das Verfahren entweder eine spezielle Sensoranordnung am Einbauort p2 verwendet werden, bei der die Einflüsse der Sensoranordnung auf die Signalübertragung recht gering, also die entsprechende Gewichtsfunktion G3 (vgl. Fig. 1) näherungsweise konstant 1 oder zumindest linear ist: Das für den Vergleich mit dem Frequenzspektrum a(f)ᵢₛₜ der Impulsantwort vorgegebene Sollspektrum a(f)ₛₒₗₗ muß dann die verschiedenen Einflußfaktoren des nachfolgenden Signalübertragungsweges berücksichtigen. So wird das Sollspektrum a(f)ₛₒₗₗ gerade nicht den idealtypischen Verlauf einer Übertragungskennlinie aufweisen, sondern in bestimmten Frequenzbereichen fx deutliche Abweichungen, die aus den Spezifika der Einflußfaktoren beruhen. Eigenfrequenzeinflüsse, Effekte des A/D-Wandlers wie auch eine eventuell unerwünschte starke Gesamtdämpfung finden Eingang in das vorgegebene Sollspektrum a(f)ₛₒₗₗ. Dieses kann similiert oder aus den Signalen abgeleitet werden. Zudem ist das Sollspektrum von der Richtung der Einprägung des Beschleunigungsimpulses und der Empfindlichkeitsrichtung des Sensors abhängig. So werden für eine Sensorbaugruppe vorzugsweise getrennte Sollspektren in Fahrtrichtung und in Querrichtung vorgegeben.

Diese Einflußfaktoren können bei Verwendung eines speziellen Sensors am Versuchsaufbau durch eine Gewichtsfunktion G1 (vgl. fig. 1 und 3) ersetzt werden, die sich aus dem Sollspektrum a(f)ₛₒₗₗ ableitet, näherungsweise dem Reziproken entspricht (vgl. dazu Fig. 2 und 3).

Ist die dabei verwendete Sensoranordnung auch nicht frei von Einflüssen, so müßte anstelle des Anteils G3 des in der Serie zu verwendeten Sensors entsprechend die Übertragungscharakteristik des Versuchssensors,genutzt werden. Zudem kommt die Verwendung des Serienaufbaus der Sensor-Baugruppe in Betracht, da diese den Großteil der ja angesprochenen Einflußfaktoren bereits inhärent hat, so dass ein Vergleich von dessen Ausgangssignalspektrum mit dem dann natürlich anders aussehenden Sollspektrum erfolgt. In diesem Fall wird das Sollspektrum primär den Einfluß des Auswertealgorithmus abbilden, der in Fig. 1 als G2 skizziert ist.

Für eine Gesamtbewertung des Einbauorts werden vorzugsweise eine Mehrzahl von im Betrieb des Fahrzeugs zu erwartenden unterschiedlichen Beschleunigungsimpulsen (s1a in Fig.1), insbesondere sicherheitsunbedenklichen Beschleunigungsimpulsen, eventuell auch sicherheitskritischen Beschleunigungsimpulsen an unterschiedlichen Auftreffstellen des Fahrzeugs eingeprägt und der Einbauort danach bewertet, inwieweit die Frequenzspektren der Impulsantworten auf diese sicherheitsunbedenklichen Impulssignale das vorgegebene Sollspektrum (a(f)ₛₒₗₗ) nicht überschreiten und andererseits die Frequenzspektren der Impulsantworten auf diese sicherheitskritischen Impulssignale das vorgegebene Sollspektrum das vorgegebene Sollspektrum (a(f)ₛₒₗₗ) übersteigen.

Besonders bevorzugt wird ein breitbandiges Normsignal s1 b, insbesondere ein weißes Rauschen oder eine Pseudozufallsfolge, wie eine Maximum-Length-Sequence-Folge (MLS-Folge), am Fahrzeug eingeprägt, die am Einbauort p2 messbare Impulsantwort gemessen, daraus über eine Fast-Fourier-Transformation die Übertragungskennlinie ermittelt und mit einer vorgegebenen Sollkennlinie a(f)ₛₒₗₗ verglichen wird. Da die Sollkennlinie a(f)ₛₒₗₗ für diese Signale bekannt ist, kann andererseits daraus auch unmittelbar die Übertragungscharakteristik im Sensor (G3 in Fig. 1) als auch im Fahrzeug (s2) errechnet werden. eine Maximum-Length-Sequenzen sind dabei binäre Sequenzen der Länge n=2^{m}-1, deren Autokorrelatiorisfunktion beschrieben ist durch p(0)=1, p(i)=-1 /n für 1 ≤ i ≤ n-1.

Dies kann insbesondere auch als Ausgangspunkt genommen werden, um zunächst anhand dieses breitbandigen Normsignals s1b in einem ersten Durchlauf das Sollspektrum näher zu spezifizieren, die Gewichtsfunktion abzuleiten und nachfolgend anhand von realtypischen Bescheunigungssignalen den Einbauort näher zu bewerten.

Zudem kann das Normsignal s1b auch unmittelbar am Einbauort p2 der Beschleunigungssensor-Baugruppe eingeprägt und die im Fahrzeug reflektierten Anteile unter Ausblendung der direkten Einkopplung bewertet werden.

Zudem können mittels diesem Verfahren Daten gewonnen werden, die in ein softwaretechnisches Verfahren eingespeist werden, bei dem ein auf einer Datenverarbeitungsanlage durchführbares Fahrzeugsimulationsprogramm vorgesehen ist, welchem Beschleunigungsimpulse an vorgegebenen Auftreffstellen am Fahrzeug vorgegeben werden und mittels des Fahrzeugsimulationsprogramms die Impulsantworten am Einbauort simuliert und der Einbauort durch Vergleich des Frequenzspektrums der simulierten Impulsantworten mit einem vorgegebenen Sollspektrum Einbauort bewertet wird.

Im Endergebnis kann für eine Vielzahl potentiell möglicher Einbauorte das Übertragungsverhalten ermittelt und können fahrzeugspezifisch kritische Einbauorte mit starker Störanfälligkeit, also kritischem Frequenzspektrum nahe am oder gar teilweise über dem Sollspektrum für nicht sicherheitskritische Beschleunigungsimpulse erkannt werden. Über die Mehrzahl von Beschleunigungssignalen kann eine Mittelung oder eine Gewichtung zur Gewinnung einer Gesamtbewertung erfolgen. Die Gesamtbewertungen aller Beschleunigungssignale für einen Einbauort werden systematisch für mehrere Einbauorte wiederholt und so eine Übersicht über die potentiellen Einbauorte im Fahrzeug insgesamt gewonnen.

## Patentansprüche

1. Verfahren zum Bewerten eines Einbauorts (p2) einer Beschleunigungssensor Baugruppe (2) in einem Fahrzeug (3) hinsichtlich der Übertragungseigenschaften von auf das Fahrzeug (3) einwirkenden Beschleunigungsimpulsen (s1a.s1b) zu diesem Einbauort (p2) mit einer nachgeschalteten Auswerteschaltung (s7), insbesondere für die Auslösung (s8) von Insassenschutzeinrichtungen,
a) indem an zumindest einer vorgegebenen Position (p1a, p1b) am Fahrzeug ein vorgegebener Beschleunigungsimpuls (s1a,s1b) eingeprägt, am Einbauort (p2) die Impulsantwort gemessen,
b) das Frequenzspektrum (a(f)ᵢₛₜ) der Impulsantwort ermittelt
c) und durch Vergleich dieses Frequenzspektrums mit einem vorgegebenen Sollspektrum (a(f)ₛₒₗₗ) der Einbauort (p2) bewertet wird.

2. Verfahren nach Anspruch 1, bei dem eine Mehrzahl von im Betrieb des Fahrzeugs zu erwartenden unterschiedlichen Beschleunigungsimpulsen (s1a) an unterschiedlichen Auftreffstellen des Fahrzeugs eingeprägt werden.

3. Verfahren nach Anspruch 2, bei dem eine Gruppe von sicherheitsunbedenklichen Beschleunigungsimpulsen, bei denen keine Auslösung von Insassenschutzeinrichtungen erforderlich ist, eingeprägt werden, wobei der Einbauort danach bewertet wird, inwieweit die Frequenzspektren der Impulsantworten auf diese sicherheitsunbedenklichen Impulssignale das vorgegebene Sollspektrum (a(f)ₛₒₗₗ) nicht überschreiten.

4. Verfahren nach Anspruch 3, wobei zusätzlich eine Gruppe von sicherheitskritischen Beschleunigungsimpulsen, bei denen eine Auslösung von Insassenschutzeinrichtungen erforderlich ist, eingeprägt werden, wobei der Einbauort danach bewertet wird, inwieweit die Frequenzspektren der Impulsantworten auf diese sicherheitskritischen Impulssignale das vorgegebene Sollspektrum (a(f)ₛₒₗₗ) übersteigen.

5. Verfahren nach einem der vorangehenden Ansprüche, wobei sich das Sollspektrum (a(f)ₛₒₗₗ) bestimmt aus:
a) der Frequenzgangkennlinie des Sensors der am Einbauort einzubauenden Beschleunigungssensorbaugruppe und
b) der Frequenzgangkennlinie der mechanischen Bestandteile der Sensorbaugruppe und
c) einer Kennlinie der nachgeschalteten Auswerteschaltung.

6. Verfahren nach Anspruch 2, bei dem zusätzlich die Frequenzgangkennlinie des zur Messung der Impulsantwort unmittelbar am Einbauort verwendeten Sensors berücksichtigt wird.

7. Verfahren nach einem der vorangehenden Ansprüche 2 bis 6, wobei die am Einbauort messbaren Impulsantworten auf die unterschiedlichen, im Betrieb des Fahrzeugs zu erwartenden Beschleunigungsimpulse mit einer Gewichtsfunktion (G) gewichtet und der nachgeschalteten Auswerteschaltung zugeführt werden, wobei die Auswerteschaltung aus der Impulsantwort entsprechend einem vorgegebenen Auswertealgorithmus ein entsprechendes Ausgangssignal erzeugt und bei der Bewertung des Einbauorts zusätzlich der Vergleich der Ausgangssignale mit jeweils für den eingeprägten Beschleunigungsimpuls vorgegebenen Sollausgangssignalen erfolgt.

8. Verfahren nach Anspruch 7, wobei die Gewichtsfunktion (G) aus dem Reziproken des Sollspektrums (a(f)ₛₒₗₗ) abgeleitet wird.

9. Verfahren nach Anspruch 7 oder 8, wobei der Auswertealgorithmus der Auswerteschaltung eine Integration des Beschleunigungsimpulses über ein Zeitfenster beinhaltet und bei der Bewertung des Einbauorts ein Vergleich der gewichteten und über dieses Zeitfenster integrierten Impulsantwort mit einem Sollintegrationswert für den jeweils eingeprägten Beschleunigungsimpuls erfolgt.

10. Verfahren nach Anspruch 1, bei dem ein breitbandiges Normsignal (s1b), insbesondere ein weißes Rauschen oder eine Pseudozufallsfolge, am Fahrzeug eingeprägt, die am Einbauort (p2) messbare Impulsantwort gemessen, daraus über eine Fast-Fourier-Transformation die Übertragungskennlinie ermittelt und mit einer vorgegebenen Sollkennlinie (a(f)ₛₒₗₗ) verglichen wird.

11. Verfahren nach Anspruch 10, wobei das Normsignal an unterschiedlichen Auftreffstellen am Fahrzeug eingeprägt und die Übertragungskennlinien von den unterschiedlichen Auftreffstellen mit der Sollkennlinie und zudem untereinander verglichen werden.

12. Verfahren nach Anspruch 10, wobei das Normsignal (s1b) am Einbauort (p2) der Beschleunigungssensor-Baugruppe eingeprägt und die im Fahrzeug reflektierten Anteile unter Ausblendung der direkten Einkopplung bewertet werden.

13. Verfahren nach einem der Ansprüche 10 bis 12, wobei als Normsignal (s1b) eine oder mehrere Maximum-Length-Sequence-Folgen (MLS-Folgen) verwendet werden.

14. Verfahren zum Bewerten eines Einbauorts einer Beschleunigungssensor-Baugruppe in einem Fahrzeug hinsichtlich der Übertragungseigenschaften von auf das Fahrzeug einwirkenden Beschleunigungsimpulsen zu diesem Einbauort mit einer nachgeschalteten Auswerteschaltung, insbesondere für die Auslösung von Insassenschutzeinrichtungen,
a) wobei ein auf einer Datenverarbeitungsanlage durchführbares Fahrzeugsimulationsprogramm vorgesehen ist,
b) welchem Beschleunigungsimpulse an vorgegebenen Auftreffstellen am Fahrzeug vorgegeben werden,
c) mittels des Fahrzeugsimulationsprogramms die Impulsantworten am Einbauort simuliert und der Einbauort durch Vergleich des Frequenzspektrums der simulierten Impulsantworten mit einem vorgegebenen Sollspektrum am Einbauort bewertet wird.

15. Verfahren nach Anspruch 14, wobei das Fahrzeugsimulationsprogramm auf den gemäß des Verfahrens nach Anspruch 10 bestimmten Übertragungskennlinien basiert.

## Claims

1. Method for assessing a positioning place (p2) of an acceleration sensor assembly (2) in a vehicle (3) with regard to the characteristic features of the transmission of vehicle (3)-influencing accelerating impulses (s1a, s1b) to this positioning place (p2) by means of a downstream evaluating circuit (s7), in particular for the tripping (s8) of passenger safeguards,
a) by impressing a predetermined accelerating impulse (s1a, s1b) in at least one predetermined position (p1a, p1b) on the vehicle, measuring the impulse response in the positioning place (p2);
b) determining frequency spectrum (a(f)ᵢₛₜ) of the impulse response; and
c) assessing the positioning place (p2) by comparing this frequency spectrum with a predetermined nominal spectrum (a(f)ₛₒₗₗ).

2. Method according to claim 1, in which a plurality of different accelerating impulses (s1a) to be expected during operation of the vehicle are impressed in different points of impact of the vehicle.

3. Method according to claim 2, in which a group of safety-noncritical accelerating impulses that do not require the tripping of passenger safeguards are impressed, wherein the positioning place is assessed with regard to the extent to which the frequency spectra of the impulse responses to these safety-noncritical impulse signals do not exceed predetermined nominal spectrum (a(f)ₛₒₗₗ).

4. Method according to claim 3, wherein a group of safety-critical accelerating impulses that require the tripping of passenger safeguards are impressed in addition, wherein the positioning place is assessed with regard to the extent to which the frequency spectra of the impulse responses to these safety-critical impulse signals exceed predetermined nominal spectrum (a(f)ₛₒₗₗ)).

5. Method according to any one of the preceding claims, wherein nominal spectrum (a(f)ₛₒₗₗ) is determined by:
a) the frequency response curve of the sensor of the acceleration sensor assembly to be positioned in the positioning place; and
b) the frequency response curve of the mechanical components of the sensor assembly; and
c) a characteristic of the downstream evaluating circuit.

6. Method according to claim 2, in which the frequency response curve of the sensor used for measuring the impulse response directly in the positioning place is also taken into consideration.

7. Method according to any one of the preceding claims 2 to 6, wherein the impulse responses to the different accelerating impulses to be expected during operation of the vehicle are weighted by means of a weighting function (G) and supplied to the downstream evaluating circuit, said impulse responses being measurable in the positioning place, wherein the evaluating circuit generates an output signal from the corresponding impulse response according to a predetermined evaluating algorithm, and the assessment of the positioning place also includes comparing the output signals with nominal output signals predetermined for each specific impressed accelerating impulse.

8. Method according to claim 7, wherein the weighting function (G) is derived from the reciprocal of nominal spectrum (a(f)ₛₒₗₗ).

9. Method according to claim 7 or 8, wherein the evaluating algorithm of the evaluating circuit includes integrating the accelerating impulse over a time window, and the assessment of the positioning place includes comparing the weighted impulse response integrated over this time window with a nominal integral value for the accelerating impulse impressed in each case.

10. Method according to claim 1, in which a broadband nominal signal (s1 b), in particular white noise or a pseudo random sequence, is impressed on the vehicle, the impulse response measurable in the positioning place (p2) is measured, the transfer characteristic is determined from it by means of a fast Fourier transform, and the transfer characteristic is compared with a predetermined nominal characteristic (a(f)ₛₒₗₗ).

11. Method according to claim 10, wherein the nominal signal is impressed on the vehicle in different points of impact, and the transfer characteristics from the different points of impact are compared with the nominal characteristic and also with each other.

12. Method according to claim 10, wherein nominal signal (s1b) is impressed in the positioning place (p2) of the acceleration sensor assembly, and the proportions reflected in the vehicle are evaluated with direct coupling being cut out.

13. Method according to any one of claims 10 to 12, wherein one or more maximum length sequences (MLS) are used as nominal signal (s1b).

14. Method for assessing a positioning place of an acceleration sensor assembly in a vehicle with regard to the characteristic features of the transmission of vehicle-influencing accelerating impulses to this positioning place by means of a downstream evaluating circuit, in particular for the tripping of passenger safeguards,
a) wherein a vehicle simulation program is provided that can be run on data processing equipment;
b) in which program, accelerating impulses in predetermined points of impact on the vehicle are preset;
c) the impulse responses in the positioning place are simulated by means of the vehicle simulation program, and the positioning place is assessed by comparing the frequency spectrum of the simulated impulse responses with a predetermined nominal spectrum.

15. Method according to claim 14, wherein the vehicle simulation program is based on the transfer characteristics defined according to the method of claim 10.

## Revendications

1. Procédé d'évaluation d'un lieu de montage (p2) d'un module de capteur d'accélération (2) dans un véhicule (3) en ce qui concerne les caractéristiques de transmission d'impulsions d'accélération (sla, s1b) agissant sur le véhicule (3) à ce lieu de montage (p2) avec un circuit d'analyse (s7) monté en aval, en particulier pour le déclenchement (s8) d'équipements de protection d'occupants,
a) en appliquant, dans au moins une position (p1a, p1b) paramétrée sur le véhicule, une impulsion d'accélération (sla, s1b) paramétrée, en mesurant sur le lieu de montage (p2) la réponse impulsionnelle,
b) en déterminant le spectre de fréquence (a(f)ᵢₛₜ) de la réponse impulsionnelle,
c) et en évaluant le lieu de montage (p2) par comparaison de ce spectre de fréquence avec un spectre de consigne (a(f)ₛₒₗₗ) paramétré.

2. Procédé selon la revendication 1, dans lequel une multiplicité d'impulsions d'accélération (s1a) différentes à quoi s'attendre pendant le fonctionnement du véhicule sont appliquées sur différents emplacements d'impact du véhicule.

3. Procédé selon la revendication 2, dans lequel un groupe d'impulsions d'accélération sans risque pour la sécurité, pour lesquelles aucun déclenchement d'équipements de protection d'occupants n'est nécessaire, sont appliquées, le lieu de montage étant ensuite évalué pour indiquer dans quelle mesure les spectres de fréquence des réponses impulsionnelles à ces signaux impulsionnels sans risque pour la sécurité ne dépassent pas le spectre de fréquence (a(f)ₛₒₗₗ) paramétré.

4. Procédé selon la revendication 3, un groupe d'impulsions d'accélération critiques pour la sécurité, pour lesquelles un déclenchement d'équipements de protection d'occupants est nécessaire, étant appliquées en plus, le lieu de montage étant ensuite évalué pour indiquer dans quelle mesure les spectres de fréquence des réponses impulsionnelles à ces signaux impulsionnels critiques pour la sécurité dépassent le spectre de consigne (a(f)ₛₒₗₗ) paramétré.

5. Procédé selon une des revendications précédentes, le spectre de consigne (a(f)ₛₒₗₗ) étant défini à partir de :
a) la courbe caractéristique de la réponse fréquentielle du capteur du module de capteur d'accélération à monter sur le lieu de montage et
b) la courbe caractéristique de la réponse fréquentielle des composants métalliques du module de capteur et
c) une courbe caractéristique du circuit d'analyse monté en aval.

6. Procédé selon la revendication 2, dans lequel la courbe caractéristique de la réponse fréquentielle du capteur utilisé pour la mesure de la réponse impulsionnelle directement sur le lieu de montage est prise en compte à titre supplémentaire.

7. Procédé selon une des revendications précédentes 2 à 6, les réponses impulsionnelles, mesurables sur le lieu de montage, aux différentes impulsions d'accélération à attendre pendant le fonctionnement du véhicule étant pondérées avec une fonction de pondération (G) et étant conduites au circuit d'analyse monté en aval, le circuit d'analyse produisant un signal de sortie correspondant à partir de la réponse impulsionnelle en fonction d'un algorithme d'analyse paramétré et, lors de l'évaluation du lieu de montage, la comparaison des signaux de sortie avec des signaux de sortie de consigne paramétrés respectivement pour l'impulsion d'accélération appliquée intervenant en plus.

8. Procédé selon la revendication 7, dans lequel la fonction de pondération (G) est dérivée à partir de la réciproque du spectre de consigne (a(f)ₛₒₗₗ).

9. Procédé selon la revendication 7 ou 8, l'algorithme d'analyse du circuit d'analyse contenant une intégration de l'impulsion d'accélération sur une fenêtre de temps et, lors de l'évaluation du lieu de montage, une comparaison de la réponse impulsionnelle pondérée et intégrée sur cette fenêtre de temps avec une valeur d'intégration de consigne pour l'impulsion d'accélération appliquée respectivement.

10. Procédé selon la revendication 1, dans lequel un signal normalisé à large bande (s1b), en particulier un bruit blanc ou une séquence de pseudo-accident, est appliqué sur le véhicule, la réponse impulsionnelle mesurable sur le lieu de montage (p2) est mesurée, la courbe caractéristique de transmission est déterminée à partir de cela via une transformée de Fourier rapide et est comparée à une courbe caractéristique de consigne paramétrée (a(f)ₛₒₗₗ).

11. Procédé selon la revendication 10, le signal normalisé étant appliqué sur différents emplacements d'impact sur le véhicule et les courbes caractéristiques de transmission des différents emplacements d'impact étant comparées à la courbe caractéristique de consigne et en plus entre elles.

12. Procédé selon la revendication 10, le signal normalisé (s1b) étant appliqué sur le lieu de montage (p2) du module de capteur d'accélération, et les fractions réfléchies dans le véhicule étant évaluées avec une collimation du couplage direct.

13. Procédé selon une des revendications 10 à 12, une ou plusieurs séquences Maximum-Length-Sequence (séquences MLS) étant utilisées comme signal normalisé (s1b).

14. Procédé d'évaluation d'un lieu de montage d'un module de capteur d'accélération dans un véhicule en ce qui concerne les caractéristiques de transmission d'impulsions d'accélération agissant sur le véhicule à ce lieu de montage avec un circuit d'analyse monté en aval, en particulier pour le déclenchement d'équipements de protection d'occupants,
a) un programme de simulation de véhicule, pouvant être exécuté sur une installation de traitement de données, étant prévu,
b) auquel des impulsions d'accélération sont fournies en tant que paramètres sur des emplacements d'impact paramétrés sur le véhicule,
c) les réponses impulsionnelles sur le lieu de montage étant simulées au moyen du programme de simulation de véhicule, et le lieu de montage étant évalué par comparaison du spectre de fréquence des réponses impulsionnelles simulées avec un spectre de consigne paramétré.

15. Procédé selon la revendication 14, le programme de simulation de véhicule étant basé sur les courbes caractéristiques de transmission définies d'après le procédé selon la revendication 10.
